# EUROPEAN PATENT SPECIFICATION

(11) **EP 2 530 762 B1**
(45) Date of publication and mention of the grant of the patent: **08.07.2015**
(21) Application number: 12168907.9
(22) Date of filing: 22.05.2012
(51) Int. Cl.: H01M 10/60

(54) **Battery arrangement**
Batterieanordnung
Agencement de batterie

(30) Priority: 31.05.2011 US 201113118799; 26.07.2011 US 201113190907
(43) Date of publication of application: 05.12.2012
(73) Proprietor: Delphi Technologies, Inc., Troy, MI 48007 (US)
(72) Inventor: KRUGER, Duane D., Westfield, IN Indiana 46074 (US); BEER, Robert C., Noblesville, IN Indiana 46062 (US)
(74) Representative: Delphi France SAS

(56) References cited:
- WO-A1-2007/046588
- WO-A1-2010/059166
- DE-A1- 19 503 085
- US-A1- 2006 240 318

## Description

### TECHNICAL FIELD OF INVENTION

This disclosure generally relates to a battery suitable for hybrid vehicle use, and more particularly relates to an arrangement of a plenum and coolant flow channels for mechanically securing and directing coolant to individual cells of the battery.

### BACKGROUND OF INVENTION

Hybrid vehicle systems use battery packs to store and retrieve energy. Plug-in Hybrid Electric Vehicles (PHEV) will also supplement the vehicle's motive power with stored electrical energy taken from the electric grid. These battery packs typically consist of individual battery cells joined together with an assortment of parallel and/or series interconnects to provide desired voltage and current performance characteristics. The PHEV battery can be discharged at a high enough rate to cause potentially damaging heat buildup within the battery pack if the heat is not removed effectively. As such, the performance of the hybrid system may be restricted in order to protect the battery from thermal damage.

It is desirable that mechanical retention of the soft package lithium cell minimizes relative movement between cells which can damage the cell's foil/plastic case or damage the foil electrodes. A cartridge may be provided that surrounds each cell to provide cooling interfaces, electrical interconnect interfaces, and cell-to-cell electrical isolation. These cartridges, as shown in DE19503085 or in US2006/240318, are typically assembled into a battery stack so the cells can be electrically interconnected as needed for use in the vehicle and provide features so the battery can be cooled by a forced air cooling system.

### SUMMARY OF THE INVENTION

In accordance with one embodiment, a battery suitable for hybrid vehicle use is provided. The battery includes a plurality of battery cells, a coolant flow channel, and a plenum. The plurality of battery cells is configured to be arranged in a layered stack and define a surface of a battery cell between adjacent battery cells. The coolant flow channel is located proximate to each surface and configured to define an entrance and an exit of the coolant flow channel. The entrance and the exit are proximate to an end of the battery cell. The plenum is coupled to a side of the stack proximate to the end. The plenum defines an intake plenum configured to fluidicly couple an intake opening of the plenum to the entrance, and defines an exhaust plenum configured to fluidicly couple an exhaust opening of the plenum to the exit. With this arrangement, coolant enters the battery via the intake opening, passes through the coolant channel to cool the battery cell, and exits the battery via the exhaust opening. The intake plenum is characterized as having an intake cross section area that decreases as a distance from the intake opening increases, and the exhaust plenum is characterized as having an exhaust cross section area that increases as a distance from the exhaust opening decreases.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a battery in accordance with one embodiment;
Fig. 2 is a perspective view of a battery cell used to form the battery of Fig. 1 in accordance with one embodiment;
Fig. 3 is a perspective view of a battery cell assembled to a plenum used to form the battery of Fig. 1 in accordance with one embodiment;
Fig. 4 is a perspective view of a plurality of battery cells assembled to a plenum used to form the battery of Fig. 1 in accordance with one embodiment;
Fig. 5A and 5B are sectional views of a plenum used to form the battery of Fig. 1 in accordance with one embodiment; and
Fig. 6 is a graph showing cross sectional areas of an intake and exhaust plenum of Fig. 1in accordance with one embodiment.

### DESCRIPTION OF THE PREFERRED EMBODIMENTS

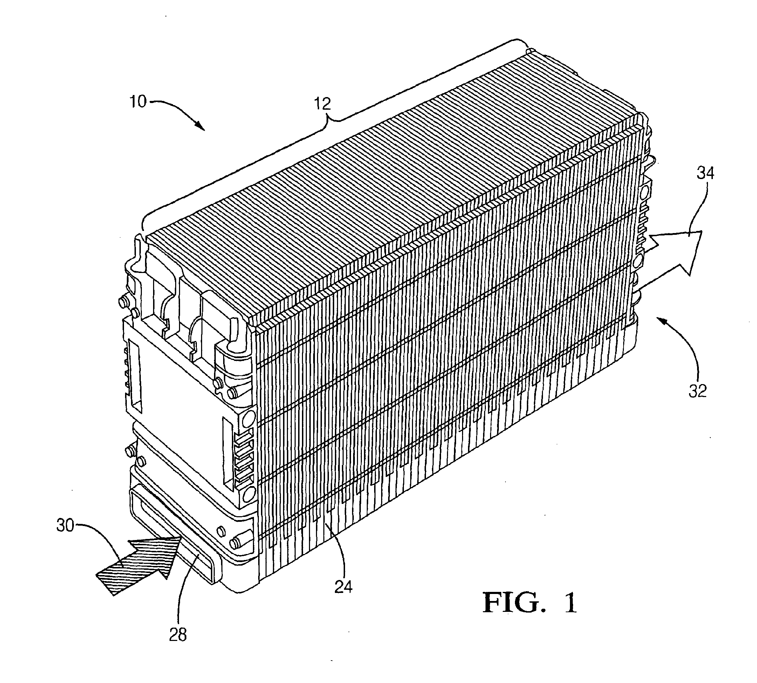

Fig. 1 illustrates a non-limiting example of a battery 10 suitable for use in a hybrid vehicle. It will be appreciated that the battery 10 may also be suitable for other applications such as for energy storage in a photovoltaic type solar energy system. The battery 10 may include a stack 12 formed by a layered arrangement of a plurality of battery cells, and a plenum 14 that provides a rigid structure to support the stack. The battery 10 may also include features such as coolant for each battery cell that help to manage the flow of coolant, for example, managing the flow of air forced into the plenum 14 by a fan (not shown) to optimize cooling of the battery cells forming the stack 12.

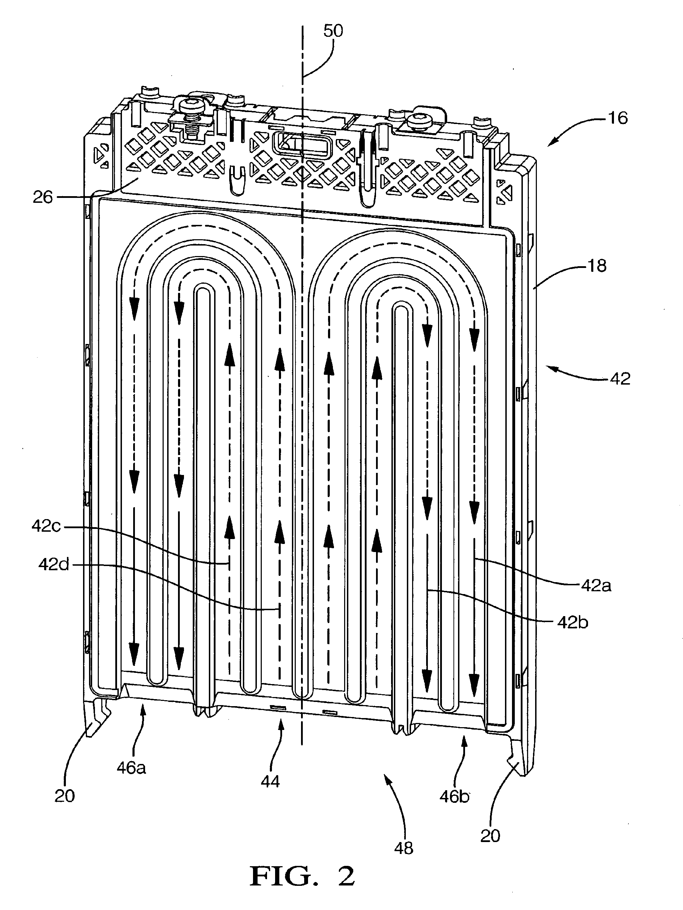

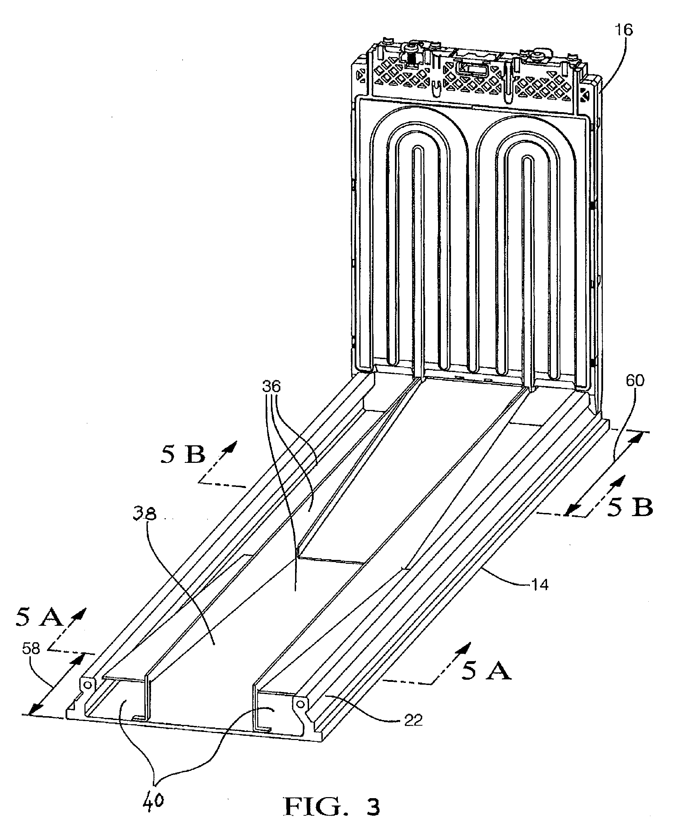

Fig. 2 illustrates a non-limiting example of a battery cell 16 that may be arranged with other battery cells to form the stack 12. In one respect, the arrangement of parts forming the battery 10 may be characterized as a mechanical cell retention system. By way of example and not limitation, the cell 16 may include a soft pouch lithium battery cell (not specifically shown) retained in a molded plastic frame 18. The frame 18 may include a tab 20 configured to engage with a slot 22 (Fig. 3) formed in the plenum 14. The tab 20 may be configured so the battery 10 can be assembled to the plenum 14, and later disassembled from the plenum 14. The tab 20 may be flexible so the frame can be attached to the plenum 14 by forcing the tabs apart to pass over the edge of the slot 22. Alternatively, the tab 20 may be ridged and so are attached to the plenum 14 by sliding the frame 18 onto the plenum from the end of the plenum 14. It may be desirable for the stack 12 of cells 16 to be pressed together in order to force a surface 26 (Fig. 2) of the cell 16 against an adjacent cell to form the stack 12, and/or seal a coolant flow channel 42. As such, the tabs 20 may be configured to slide along the slot 22 in order to allow the cells 16 to be pressed together. The battery 10 may also include a side panel 24 (Fig. 1) that encompasses the plenum 14 in a manner effective to provide a secondary lock function by reinforcing the engagement of tab 20 with the slot 22 by trapping the tab 20 between the plenum 14 and the side panel 24.

In another respect, the arrangement of parts forming the battery 10 may be characterized as a thermal management system. Fig. 1 illustrates an intake opening 28 configured to receive intake air 30 for cooling the battery 10. The battery 10 may also include an exhaust opening 32 where exhaust air 34 can exit the battery 10 in order to remove heat from the battery 10. The shape of the cells 16 may be such that a surface 26 (Fig. 2) of a battery cell 16 is defined between adjacent battery cells 16. The surface may include a coolant flow channel 42, illustrated in Fig. 2 as distinct flow channels 42a, 42b, 42c, and 42d located proximate to surface 26. The coolant flow channel 42 generally defines an entrance 44 and an exit 46, illustrated in this example as exits 46a and 46b of the coolant flow channel 42. In order for the entrance 44 and the exit 46 to fluidicly c couple with the plenum 14, it may be preferable for the entrance 44 and the exit 46 to be proximate to an end 48 of the battery cell 16.

Fig. 3 illustrates non-limiting example of an air baffle 36 residing within the plenum. If it is desired for the plenum 14 to be formed by extrusion, then the air baffle 36 may be a separate part formed of, for example, sheet metal that is preformed and assembled to the plenum 14. Alternatively, the plenum 14 and air baffle 36 may be integrally formed, for example by injection molding polymeric material. In this non-limiting example, the air baffle 36 segregates space within the plenum 14 into an intake plenum 38 and an exhaust plenum 40.

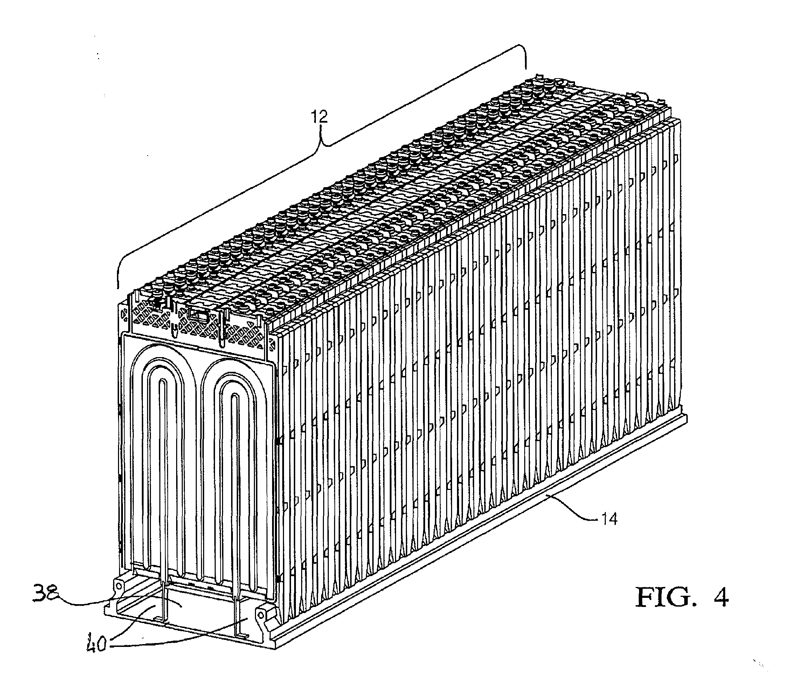

Fig. 4 illustrates a non-limiting example of how the plenum 14 may be coupled to a side of the stack 12 proximate to the end 48 such that the plenum 14 and stack 12 defines the intake plenum 38 and the exhaust plenum 40. In this example, the intake plenum 38 is configured to fluidicly couple the intake opening 28 to the entrance 44, and the exhaust plenum 40 is configured to fluidicly couple the exhaust opening 32 to the exit 46. By this arrangement, coolant may enter the battery 10 via the intake opening 28, pass through the coolant channel 42 to cool the battery cells forming the stack 12, and exit the battery 10 via the exhaust opening 32.

It is desirable that the cooling of each cell 16 forming the battery 10 be such that the operating temperature of each cell is substantially the same, for example, having a maximum difference of five degrees Celsius (5°C) between any spot on one cell 16 and any other spot on another cell forming the battery 10. While not subscribing to any particular theory, it is believed that if the intake plenum 38 and the exhaust plenum were made very large, there would be no significant pressure difference between any points in either plenum, and so the coolant flow through the coolant channels 42 would be substantially equal in terms of flow rate and/or temperature. However, application packaging and performance requirements dictate the maximum physical size and electrical performance requirements of the battery 10, and so the size of the cells 16 and the plenum 14 must be balanced to optimize battery performance. It was discovered that as the intake plenum 38 and the exhaust plenum 40 were made smaller, the relative temperature difference at locations within a cell 16 forming the stack 12 increased, as well as increased cell to cell temperature differences.

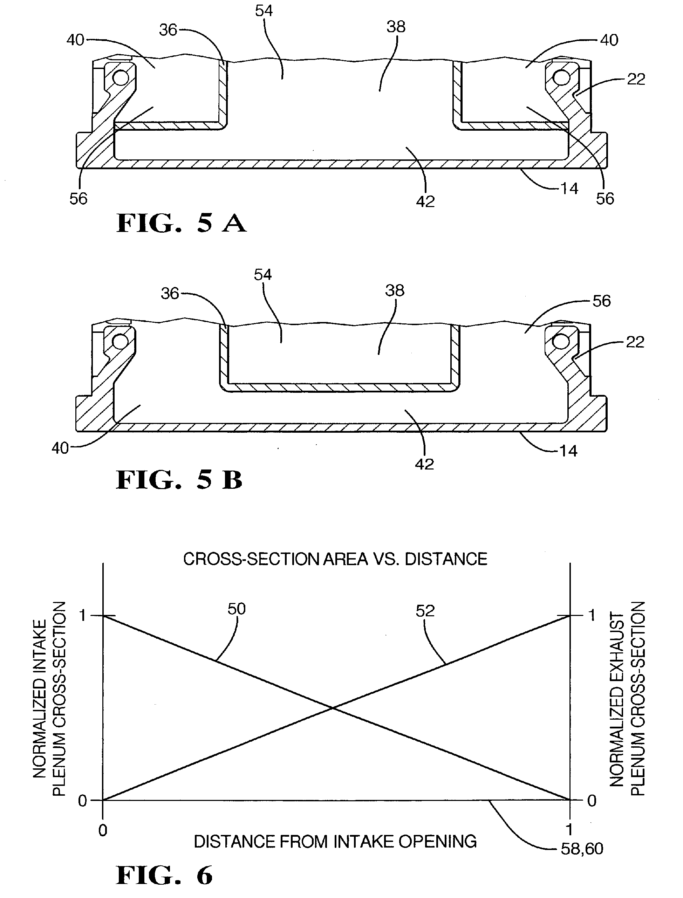

It was discovered that temperature differences were reduced if the air baffle 36 was shaped such that the intake plenum 38 had an intake cross section area 54 (Fig. 5) that decreases as a distance 58 from the intake opening 28 increases, and the exhaust plenum 40 had an exhaust cross section area 56 that increases as a distance 60 from the exhaust opening 32 decreases. The non-limiting example of the air baffle 36 is illustrated_as having generally straight wall sections to make forming the air baffle 36 simple when the air baffle 36 is formed of sheet metal. However, it is recognized that other shapes of the air baffle 36 may provide more uniform temperatures in the stack 12 depending on various factors such as maximum pressure drop of the intake air 30 at the intake opening 28 to the exhaust air 34 at the exhaust opening 32.

Fig. 6 illustrates a graph of an intake profile 50 indicating a normalized intake plenum cross section versus the distance 58 from the intake opening 28, and a corresponding exhaust profile 52 for the air baffle 36 illustrated in Fig. 3. Alternatively, either one of the intake plenum 38 or exhaust plenum 40 may not be restricted in size since, for example, they are coupled to an ambient air environment and so do not have either an intake opening 28 or an exhaust opening 32. As such, in some embodiments of the battery 10, it may be that only the intake profile 50 or the exhaust profile 52 needs to be shaped to achieve a particular temperature characteristic. However, as some applications require both the intake air 30 and exhaust air 34 to be routed through ducts or the like, and the overall size of the plenum 14 is limited, the complementing profiles illustrated in Fig. 6 make for a useful tradeoff.

Accordingly, a battery 10 suitable for hybrid vehicle use is provided. The plenum 14 is generally configured to couple with the plurality of battery cells 16 in a manner effective to secure the plurality of battery cells to the plenum and form the stack 12. The frame 18 or cartridge design that interfaces with the plenum 14 allows for the coolant channel 42 design to be independent/decoupled from the intake plenum 38 and exhaust plenum 40 cross-section geometry and/or area. This provides scalability and modularity for various battery designs. Each cell 16 includes a tab 20 extending from the end 48, and the plenum 14 defines a slot 22 configured to receive the tab 20 to secure the battery cell 16 to the plenum 14. The tab may be configured to be a flexible member. This flexibility enables both transverse and axial assembly of the cell 16 to the plenum. The battery may also include side walls to increase pack stiffness/rigidity. These side walls may function as both a secondary lock; assuring full assembly/retention of the tabs 20 to the slot 22. Additionally, the tab 20 interface to the slot 22 was designed to draw the frame 18 toward the plenum 14 with a slight interference to create a tensile load on the tabs 20. This feature maximizes structural rigidity by minimizing tolerance over travel. Since the flex locks may not be fully seated until the transverse force is applied by the side panel 24 or other outer cover, the frames 18 can be axially compressed to interlock with the adjacent frames 18 to further enhancing mechanical rigidity.

While this invention has been described in terms of the preferred embodiments thereof, it is not intended to be so limited, but rather only to the extent set forth in the claims that follow.

## Claims

1. A battery (10) suitable for hybrid vehicle use, said battery (10) comprising:
a plurality of battery cells (16) configured to be arranged in a layered stack (12) and define a surface (26) of a battery cell (16) between adjacent battery cells (16),
a coolant flow channel (42) located proximate to each surface (26) and configured to define an entrance (44) and an exit (46) of the coolant flow channel (42), wherein the entrance (44) and the exit (46) are proximate to an end (48) of the battery cell (16);
a plenum (14) coupled to a side of the stack (12) proximate to the end (48), wherein the plenum (14) defines an intake plenum (38) configured to fluidicly couple an intake opening (28) of the plenum (14) to the entrance (44), and defines an exhaust plenum (40) configured to fluidicly couple an exhaust opening (32) of the plenum (14) to the exit (46), whereby coolant enters the battery (10) via the intake opening (28), passes through the coolant channel (42) to cool the battery cell (16), and exits the battery (10) via the exhaust opening (32), the intake plenum (38) having an intake cross section area (54) that decreases as a distance (58) from the intake opening (28) increases, and the exhaust plenum (40) having an exhaust cross section area (56) that increases as a distance (60) from the exhaust opening (32) decreases, **characterized in that**
the plenum (14) is further configured to couple with the plurality of battery cells (16) in a manner effective to secure the plurality of battery cells (16) to the plenum (14) and form the stack (12), and **in that**,
the battery cell (16) includes a tab (20) extending from the end (48), and the plenum (14) defines a slot (22) configured to receive the tab (20) to secure the battery cell (16) to the plenum (14).

2. The battery (10) in accordance with claim 1, wherein an intake profile (50) of the intake cross section area (54) versus the distance (58) from the intake opening (28) is selected to balance a coolant flow rate in each coolant channel (42) such that an operating temperature for each of the plurality of battery cells (16) is substantially equal.

3. The battery (10) in accordance with claim 1, wherein an exhaust profile (52) of the exit (46) cross section area versus the distance (60) from the exhaust opening (32) is selected to balance a coolant flow rate in each coolant channel (42) such that an operating temperature for each of the plurality of battery cells (16) is substantially equal.

## Patentansprüche

1. Eine Batterie (10), die für eine Verwendung in einem Hybridfahrzeug geeignet ist, wobei die Batterie (10) aufweist:
eine Vielzahl von Batteriezellen (16), die konfiguriert sind, in einem geschichteten Stapel (12) angeordnet zu werden, und die eine Oberfläche (26) einer Batteriezelle (16) zwischen angrenzenden Batteriezellen (16) definieren,
einen Kühlmittelströmungskanal (42), der in der Nähe jeder Oberfläche (26) angeordnet ist und konfiguriert ist, einen Einlass (44) und einen Auslass (46) des Kühlmittelströmungskanals (42) zu definieren, wobei der Einlass (44) und der Auslass (46) in der Nähe eines Endes (48) der Batteriezelle (16) sind;
ein Plenum (14), das mit einer Seite des Stapels (12) in der Nähe des Endes (48) gekoppelt ist, wobei das Plenum (14) ein Einlassplenum (38) definiert, das konfiguriert ist zum Fluid-Koppeln einer Einlassöffnung (28) des Plenums (14) mit dem Einlass (44), und ein Abgasplenum (40) definiert, das konfiguriert ist zum Fluid-Koppeln einer Abgasöffnung (32) des Plenums (14) mit dem Auslass (46), wobei Kühlmittel über die Einlassöffnung (28) in die Batterie (10) eintritt, durch den Kühlmittelkanal (42) geht, um die Batteriezelle (16) zu kühlen, und die Batterie (10) über die Abgasöffnung (32) verlässt, wobei das Einlassplenum (38) einen Einlassquerschnittsbereich (54) hat, der abnimmt, wenn eine Distanz (58) von der Einlassöffnung (28) zunimmt, und das Abgasplenum (40) einen Abgasquerschnittsbereich (56) hat, der zunimmt, wenn eine Distanz (60) von der Abgasöffnung (32) abnimmt, **dadurch gekennzeichnet, dass**
das Plenum (14) weiter konfiguriert ist zum Koppeln mit der Vielzahl von Batteriezellen (16) auf eine Weise, die effektiv ist zum Sichern der Vielzahl von Batteriezellen (16) an dem Plenum (14) und Bilden des Stapels (12), und dadurch, dass
die Batteriezelle (16) einen Vorsprung (20) umfasst, der sich von dem Ende (48) erstreckt, und das Plenum (14) einen Schlitz (22) definiert, der konfiguriert ist zum Aufnehmen des Vorsprungs (20), um die Batteriezelle (16) an dem Plenum (14) zu befestigen.

2. Die Batterie (10) gemäß Anspruch 1, wobei ein Einlassprofil (50) des Einlassquerschnittsbereichs (54) hinsichtlich der Distanz (58) von der Einlassöffnung (28) ausgewählt wird, um eine Kühlmittelströmungsrate in jedem Kühlmittelkanal (42) derart auszugleichen, dass eine Betriebstemperatur für jede der Vielzahl von Batteriezellen (16) im Wesentlichen gleich ist.

3. Die Batterie (10) gemäß Anspruch 1, wobei ein Abgasprofil (52) des Querschnittsbereichs des Auslasses (46) hinsichtlich der Distanz (60) von der Abgasöffnung (32) ausgewählt wird, um eine Kühlmittelströmungsrate in jedem Kühlmittelkanal (42) derart auszugleichen, dass eine Betriebstemperatur für jede der Vielzahl von Batteriezellen (16) im Wesentlichen gleich ist.

## Revendications

1. Batterie (10) appropriée pour l'utilisation dans un véhicule hybride, ladite batterie (10) comprenant :
une pluralité de cellules de batterie (16) configurées pour être agencées dans un empilement en couches (12) et définir une surface (26) d'une cellule de batterie (16) entre des cellules de batterie adjacentes (16),
un canal d'écoulement de réfrigérant (42) situé à proximité de chaque surface (26) et configuré pour définir une entrée (44) et une sortie (46) du canal d'écoulement de réfrigérant (42), telles que l'entrée (44) et la sortie (46) sont à proximité d'une extrémité (48) de la cellule de batterie (16),
un plénum (14) couplé à un côté de l'empilement (12) à proximité de l'extrémité (48), dans lequel le plénum (14) définit un plénum d'admission (38) configuré pour coupler sur le plan fluidique une ouverture d'admission (28) du plénum (14) à l'entrée (44), et définit un plénum d'échappement (40) configuré pour coupler sur le plan fluidique une ouverture d'échappement (32) du plénum (14) à la sortie (46), grâce à quoi du réfrigérant entre dans la batterie (10) via l'ouverture d'admission (28), passe à travers le canal de réfrigérant (42) pour refroidir la cellule de batterie (16) et sort de la batterie (10) via l'ouverture d'échappement (32), le plénum d'admission (38) ayant une aire de section transversale d'admission (54) qui diminue alors que la distance (58) depuis l'ouverture d'admission (28) augmente, et le plénum d'échappement (40) ayant une aire de section transversale d'échappement (56) qui augmente alors que la distance (60) depuis l'ouverture d'échappement (32) diminue,
**caractérisée en ce que**
le plénum (14) est en outre configuré pour être couplé avec la pluralité de cellules de batterie (16) d'une manière effective pour attacher la pluralité de cellules de batterie (16) sur le plénum (14) et former l'empilement (12), et
**en ce que** la cellule de batterie (16) inclut une patte (20) s'étendant depuis l'extrémité (48), et le plénum (14) définit une fente (22) configurée pour recevoir la patte (20) pour attacher la cellule de batterie (16) sur le plénum (14).

2. Batterie (10) selon la revendication 1, dans laquelle un profil d'admission (50) de l'aire de section transversale d'admission (54) en fonction de la distance (58) depuis l'ouverture d'admission (28) est sélectionné pour équilibrer un débit de réfrigérant dans chaque canal de réfrigérant (42), de sorte qu'une température de fonctionnement pour chacune de la pluralité de cellules de batterie (16) est sensiblement égale.

3. Batterie (10) selon la revendication 1, dans laquelle un profil d'échappement (52) de l'aire de section transversale de sortie (46) en fonction de la distance (60) depuis l'ouverture d'échappement (32) est sélectionné pour équilibrer un débit de réfrigérant dans chaque canal de réfrigérant (42), de sorte qu'une température de fonctionnement pour chacune de la pluralité de cellules de batterie (16) est sensiblement égale.
